Europäisches Patentamt

European Patent Office

Office européen des brevets

(19)

(11) Numéro de publication : **0 018 859**
**B1**

(12) **FASCICULE DE BREVET EUROPÉEN**

(45) Date de publication du fascicule du brevet :
14.09.83

(51) Int. Cl.³ : **H 04 M 19/02, H 04 Q 3/00**

(21) Numéro de dépôt : **80400392.9**

(22) Date de dépôt : **24.03.80**

(54) **Dispositif de commande de sonnerie.**

(30) Priorité : 30.03.79 FR 7907999

(43) Date de publication de la demande :
12.11.80 Bulletin 80/23

(45) Mention de la délivrance du brevet :
14.09.83 Bulletin 83/37

(84) Etats contractants désignés :
BE CH DE GB LU NL SE

(56) Documents cités :
DE B 2 415 473
FR A 2 382 818
US A 3 223 787
US A 3 829 619

1978 INTERNATIONAL ZURICH SEMINAR ON
DIGITAL COMMUNICATIONS, 7-9 mars 1978,
Zurich, CH A.D. DU MOSCH et al. « Introduction,
Interfacing and signalling aspects of digital techniques in the local network », pages D 5.1/D 5.5

(73) Titulaire : **SOCIETE ANONYME DE TELECOMMUNI-
CATIONS**
**40 avenue de New York**
**F-75116 Paris (FR)**

(72) Inventeur : **Israel, Renato Giuseppe**
**15 Rue Gabriel**
**F-78000 Versailles (FR)**
Inventeur : **Lavoisard, Jean-Louis**
**23 rue Hugede**
**F-94340 Joinville-le-Pont (FR)**
Inventeur : **Marchand, Jean-Claude**
**décédé**
***** **(FR)**

(74) Mandataire : **Bloch, Robert et al**
**Cabinet ROBERT BLOCH 39 avenue de Friedland**
**F-75008 Paris (FR)**

# Dispositif de commande de sonnerie

Le présent brevet est relatif à un dispositif de commande de sonnerie d'un ensemble de postes téléphoniques reliés à un réseau de connexion (central téléphonique électronique). Lorsqu'un poste est appelé, il faut d'abord envoyer un courant pour actionner la sonnerie associée à ce poste après avoir vérifié que ce poste n'est pas en service et ensuite faire cesser cette sonnerie dès que le combiné du poste appelé est décroché, ceci afin d'éviter l'envoi dans le récepteur de signaux de sonnerie de niveau élevé.

Pour cela, dans les systèmes de commutation temporelle antérieurs, un circuit, chargé de détecter la présence du courant continu correspondant à la réponse à un appel et de supprimer la sonnerie par laquelle se manifeste cet appel était attribué à chaque poste appelé. Le taux d'utilisation de ce circuit était évidemment très faible et ne permettait de détecter la réponse que pendant un creux de sonnerie ou en l'absence de sonnerie.

Une amélioration a été décrite dans le brevet français n° 2 290 805 ; selon ce brevet, un circuit chargé de détecter la réponse à un appel pendant les pleins de sonnerie et de supprimer la sonnerie correspondante travaille en temps partagé pour un nombre limité n de postes appelés au moyen d'une sonnerie dont la période active d'une durée de 1/n est décalée pour chaque poste d'un temps de 1/n.

Pour qu'un tel détecteur du décrochage conserve son efficacité, le nombre n de postes appelés ne doit pas être très élevé ; dans la description dudit brevet, ce nombre n est pris égal à 4, ainsi le circuit chargé de détecter la réponse à un appel et de supprimer la sonnerie correspondante a-t-il un meilleur taux d'utilisation, sans toutefois que celui-ci ne soit encore très grand.

Un autre système de détection du décrochage d'abonnés insérés sur un même groupement de lignes d'abonnés est déjà connu. Il consiste essentiellement à tester systématiquement tous les postes d'abonnés pendant la sonnerie. En effet, un signal de sonnerie est un signal périodique formé d'un temps de sonnerie de durée 1,6 s et d'un temps de repos de durée 3,3 s. Le procédé de détection systématique de l'art antérieur prévoit une ou deux interruptions de sonnerie systématiques de durée voisine de 100 ms pour tous les postes d'abonnés. Ces interruptions interviennent à chaque période et se traduisent à l'oreille des abonnés en sonnerie par une perturbation de la sonnerie.

Par ailleurs, la demande de brevet français 2 382 818 prévoit un détecteur de décrochage commun pour tout le groupe de lignes d'abonnés. Ce détecteur commun délivre un signal si un décrochage se produit pendant un plein de sonnerie sur l'une au moins des lignes d'abonnés, lequel signal est envoyé au réseau de connexion qui commande alors l'arrêt des sonneries sur toutes les lignes appelées. Cet arrêt est ensuite confirmé, pour la ligne sur laquelle le décrochage a eu lieu effectivement, par le dispositif de supervision propre à chaque ligne.

Ce système a l'inconvénient de faire intervenir la logique centrale du réseau de connexion et donc de lui imposer une fonction supplémentaire.

Enfin, le brevet allemand 24 15 473 qui, certes enseigne une commande de sonnerie décentralisée mettant en œuvre des circuits logiques ET, ne traite toutefois pas du problème du décrochage d'abonnés en plein de sonnerie.

La présente invention a pour objet un dispositif de commande de sonnerie pour un groupe de lignes d'abonnés $Ab_i$ desservi par un réseau de connexion RC, comprenant un relais $U_i$ pour chaque ligne, le réseau de connexion fournissant un signal de commande de sonnerie $CS_i$ et un signal de cadencement $H_S$ pour la commande du relais, un générateur de sonnerie commun au groupe de lignes et fournissant un courant de sonnerie alternatif à une ligne lorsque les contacts du relais correspondant occupent une première position, un dispositif de supervision $E_i$ pour chaque ligne, relié à celle-ci dans la deuxième position des contacts du relais et délivrant un signal $DS_i$ au réseau de connexion si le décrochage se produit pendant que les contacts du relais occupent cette deuxième position, et un détecteur de décrochage commun délivrant un signal V si un courant continu apparaît, par suite du décrochage, sur l'une au moins des lignes du groupe pendant l'envoi d'un courant de sonnerie (première position du relais), caractérisé par le fait qu'il comprend sur chaque ligne un circuit ET, $G_i$ recevant du réseau de connexion le signal de commande de sonnerie $CS_i$ et le signal de cadencement $H_S$, relié au dispositif de supervision $E_i$ par l'intermédiaire d'un inverseur $F_i$ et au détecteur de décrochage commun et dont le signal de sortie $Y_i$ commande le relais $U_i$, le détecteur de décrochage commun comprenant à sa sortie un monostable fournissant un signal V d'arrêt de sonnerie de durée suffisante pour permettre la détection du décrochage par le dispositif de supervision $E_i$ après basculement des contacts de relais.

Grâce à l'invention, on obtient un dispositif de commande de sonnerie avec un système de détection du décrochage d'abonnés en plein de sonnerie décentralisé au maximum, et ce, sans perturbation de la sonnerie, ce qui allège les tâches du réseau de connexion et évite des transmissions de signaux supplémentaires.

La présente invention sera mieux comprise à l'aide de la description suivante d'une forme de réalisation préférée du dispositif de l'invention, en référence aux dessins annexés.

La figure 1 est une représentation générale du dispositif de l'invention.

La figure 2 est une réalisation détaillée du dispositif de la figure 1.

La figure 3 est une représentation du fonctionnement du dispositif 5 de la figure 2.

La figure 4 est un diagramme des temps pendant une période de sonnerie pour trois abonnés $Ab_i$, $Ab_h$, $Ab_j$ se trouvant dans des états distincts.

La figure 5 est une représentation schématique d'une réalisation préférée du dispositif de la figure 1.

La figure 6 est une variante de réalisation de la figure 2.

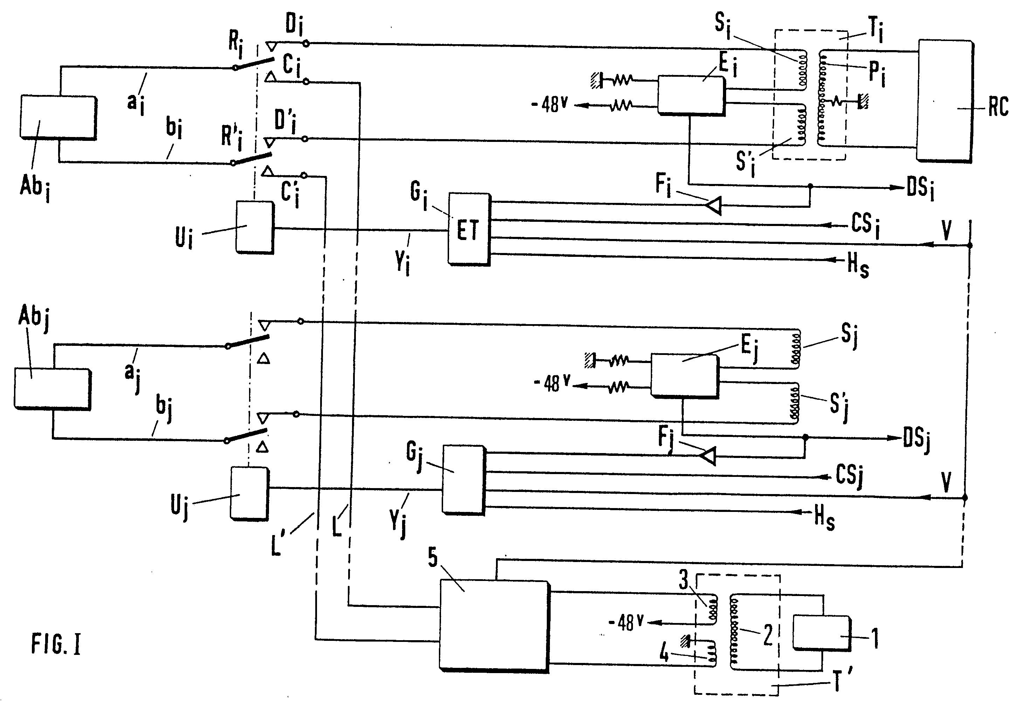

En se référant à la figure 1, n abonnés $Ab_i$ (i = 1, n) sont reliés, chacun, au moyen de deux fils $a_i$ et $b_i$ d'une ligne d'abonné, à une ligne commune LL' les raccordant au générateur de sonnerie 1. Chaque ligne $(a_i, b_i)$ d'abonné est raccordée à la ligne LL' au moyen des contacts $R_i$, $R_i'$ qui sont actionnés par un relais $U_i$ ainsi qu'on l'explicitera ultérieurement. Les contacts $R_i$ et $R_i'$ peuvent ainsi être positionnés soit en $C_iC_i'$ pour la liaison au dispositif de sonnerie par l'intermédiaire de la ligne LL', soit en $D_iD_i'$ pour la liaison au réseau de connexion RC par l'intermédiaire d'un transformateur $T_i$, ce qui permet à l'abonné de recevoir la communication. Le transformateur différentiel $T_i$ se compose d'un enroulement primaire $P_i$ relié au réseau RC de connexion et de deux enroulements secondaires $S_i$ et $S_i'$. L'enroulement $S_i$ (resp. $S_i'$) est relié d'une part, au contact $D_i$ (resp. $D_i'$) de l'abonné $Ab_i$ et d'autre part, à un dispositif $E_i$ de supervision qui est porté d'une part à la masse, d'autre part au potentiel − 48 volts. Le dispositif $E_i$ de supervision est capable de détecter l'écoulement d'un courant de boucle si l'abonné $Ab_i$ décroche lorsque les contacts $R_i$ et $R_i'$ sont placés en $D_i$ et $D_i'$ (creux de sonnerie). Le dispositif $E_i$ émet alors un signal $DS_i$ représentatif du décrochage lorsque l'abonné $Ab_i$ a décroché son combiné. Ce signal $DS_i$ est transmis aux organes de commande non représentés sur la figure pour empêcher que la sonnerie de l'abonné soit à nouveau excitée pendant la communication.

Le dispositif 1 de sonnerie fournit un signal alternatif de fréquence 25 Hz ou 50 Hz aux bornes d'un enroulement primaire 2 d'un transformateur T'. Le secondaire de ce transformateur T' se compose de deux enroulements 3 et 4. L'enroulement 3 est raccordé d'un côté au potentiel − 48 V d'une batterie et de l'autre, par la ligne L commune aux n abonnés, aux contacts $C_i$ (i = 1, n). L'enroulement 4 est porté d'un côté à la masse en un point W et de l'autre côté est raccordé, par l'intermédiaire de la ligne L' commune, aux contacts $C_i'$ (i = 1, n).

Un signal $H_s$ de cadencement fourni par le réseau de connexion, de période 5 s, autorise un état de sonnerie pendant 1,66 s et un silence de durée 3,33 s. Ce signal $H_s$ est appliqué à l'entrée d'une porte ET $G_i$, pour chaque abonné, porte $G_i$ qui reçoit également un signal $CS_i$ de commande de sonnerie fourni par les organes de commande non représentés. Les états 1 du signal $H_s$ de cadencement autorisent un plein de sonnerie tandis que les états 0 du signal $H_s$ correspondent aux silences. Les contacts $R_i$ et $R_i'$ de l'abonné $Ab_i$ sont actionnés au moyen d'un relais $U_i$ qui est commandé par un signal $Y_i$ obtenu à la sortie d'une porte ET $(G_i)$. Chaque porte $G_i$ reçoit le signal $\overline{DS_i}$ obtenu par inversion au moyen d'un inverseur $F_i$ à partir du signal $DS_i$ fourni par le dispositif de supervision $E_i$ de l'abonné $Ab_i$. Le signal $DS_i$ ainsi qu'il a été précédemment expliqué est le signal d'état de boucle de l'abonné $Ab_i$ lorsque ses contacts $R_iR_i'$ sont respectivement en $D_iD_i'$. Chaque porte $G_i$ reçoit en outre les signaux $CS_i$. Le signal $Y_i$ obtenu en sortie de la porte $G_i$ est appliqué au relais $U_i$ de l'abonné $Ab_i$. De la sorte, si un appel arrive pour l'abonné $Ab_i$, le relais $U_i$ positionne les contacts $R_i$ et $R_i'$, pendant les pleins de sonnerie ($H_s = 1$), en $C_i$ et $C_i'$ pour la liaison au dispositif d'appel qui injecte un courant alternatif sur la ligne $a_i$, $b_i$ de l'abonné $Ab_i$ et repositionne les contacts $R_i$ et $R_i'$, pendant les creux de sonnerie ($H_s = 0$) en $D_i$ et $D_i'$.

Si l'abonné décrochait son combiné pendant un plein de sonnerie, un courant alternatif de sonnerie serait injecté dans le combiné, ce qui serait désagréable et néfaste pour l'installation. Il est donc nécessaire de détecter le décrochage du combiné de l'abonné $Ab_i$ appelé, le plus rapidement possible, moins de 200 ms après son intervention et ceci même pendant une impulsion de sonnerie, et d'éviter sa remise en service au cours de la période suivante du signal $H_s$ de cadencement.

On insère, à cet effet, un dispositif 5 permettant d'arrêter la sonnerie, pour un groupe d'abonnés, dès le décrochage d'un des combinés.

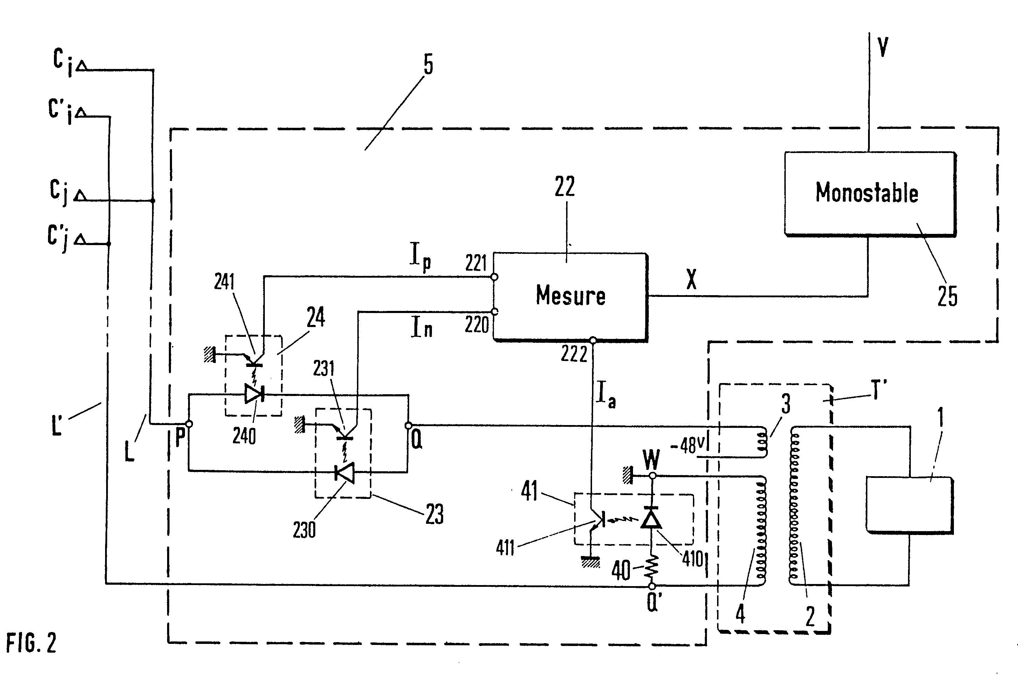

En se référant à la figure 2, on dispose aux bornes de sortie des enroulements secondaires 3 et 4 du transformateur T' un détecteur 5 commun au groupe de n abonnés c'est-à-dire sur la ligne LL'. Si l'abonné $Ab_i$ décroche son combiné à la suite d'un appel, un courant continu de boucle s'écoule sur la ligne LL'. Le détecteur 5 est pourvu selon l'invention de moyens permettant de détecter la superposition du courant continu de boucle au courant alternatif de sonnerie et ce de façon quasi instantanée.

On dispose selon l'invention aux bornes de l'enroulement 4 secondaire du transformateur T', entre le point Q' de la ligne L' et le point W porté à la masse, une résistance 40 et un photodétecteur 41 placés en série. Le photodétecteur 41 se compose d'une photodiode 410 qui, sous l'effet du passage du courant, émet un rayonnement qui porte la base du phototransistor 411 à un potentiel tel qu'il devient passant. L'émetteur du phototransistor 411 étant porté à la masse et son collecteur étant relié à la borne 222 d'un dispositif 22 de mesure, le photodétecteur 410 fournit un courant $I_a$ pendant une durée $d_o$ de référence à la borne 222 du dispositif 22, c'est-à-dire pendant les demi-alternances du courant de sonnerie. Entre deux points P et Q de la ligne L, à la sortie de l'enroulement secondaire 3, on dispose en parallèle deux photodétecteurs 23 et 24 placés en inverse. Le photodétecteur 23 se compose d'une photodiode 230, par exemple passante de Q vers P qui peut émettre un rayonnement sur la base d'un phototransistor 231 dont l'émetteur est porté à la masse et le collecteur est relié à la porte 220 du dispositif 22 de mesure. De la même façon le photodétecteur 24 se compose d'une photodiode 240, passante de P vers Q qui peut activer la base du phototransistor 241 dont l'émetteur est également porté à la masse et le collecteur est relié à une autre entrée 221 du dispositif 22 de mesure.

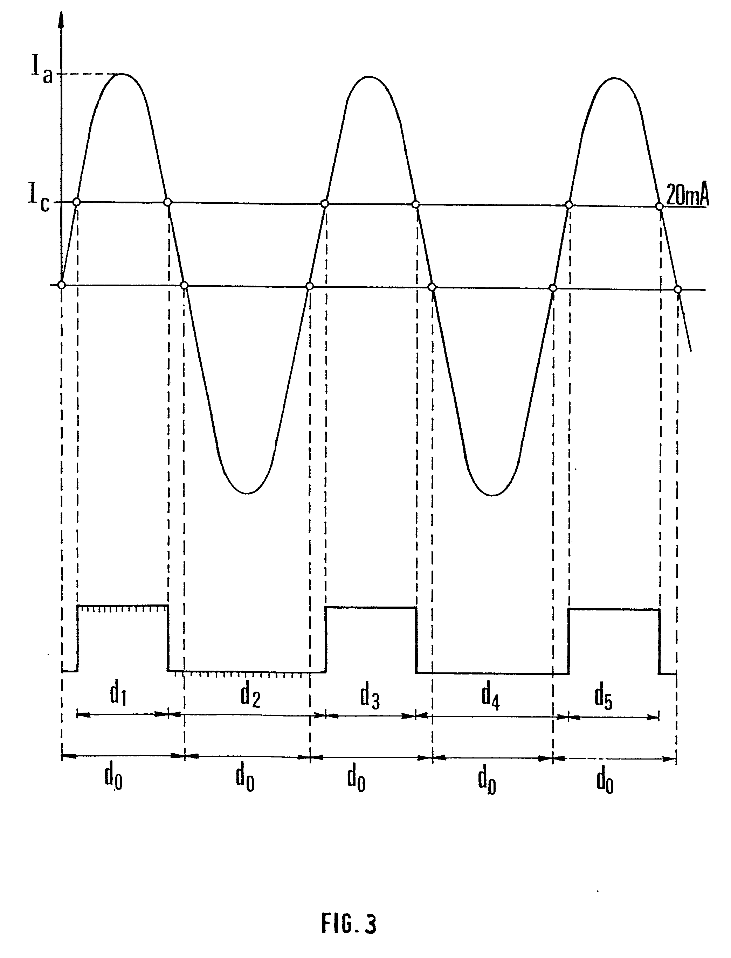

Le dispositif 22 reçoit donc sur chaque entrée 220 et 221 alternativement le courant correspondant aux alternances positives et négatives du courant d'appel. Lorsque l'abonné appelé n'a pas décroché, il y a égalité des durées de passage des courants traversant chaque photodétecteur 23 et 24 aux entrées respectives 220 et 221 du dispositif 22. Cependant, lorsque l'abonné appelé décroche son combiné à la suite d'un appel, le courant continu de boucle se superpose au courant de sonnerie ainsi que le représente la figure 3.

Le courant de sonnerie est un courant de valeur efficace moyenne 50 mA tandis que le courant de boucle a une valeur moyenne de l'ordre de 30 mA. Il y a donc un déséquilibre entre les durées de passage des courants reçus aux bornes 220 et 221 du dispositif 22 de mesure. En effet le courant continu de boucle de l'abonné qui a décroché se superpose à une alternance et les durées de passage des courants fournis par chaque photodétecteur 23 et 24 aux entrées 220 et 221 sont différentes. Si on appelle $d_1$, $d_3$, $d_5$... la durée de passage d'un courant sur un photodétecteur, et $d_2$, $d_4$, $d_6$... la durée de passage sur l'autre photodétecteur, les durées $d_1$ et $d_2$ sont différentes au cours d'une période du courant d'appel. On suppose sur la figure 3 que $d_2$ est supérieur à $d_1$. Comme le courant continu n'est pas tout à fait stabilisé dès sa naissance, il est nécessaire de mesurer également les durées $d_3$, $d_4$, puis $d_5$ et $d_6$ pour prendre en compte le phénomène.

Le dispositif 22 de mesure est capable d'effectuer la mesure de ($d_2 - d_1$) pour chaque période du signal d'appel et de comparer ces grandeurs à la durée $d_0$ d'une demi-alternance du signal d'appel en l'absence de courant continu. Le dispositif de mesure 22 reçoit en effet également le signal d'appel à sa borne 222. On choisit un dispositif 22 de mesure connu en soi susceptible d'effectuer la division $d_2 - d_1/d_0$ et de comparer cette grandeur à un rapport r convenablement choisi. Le dispositif 22 effectue cette mesure pour plusieurs périodes du signal d'appel et ne fournit un signal x de sortie qu'au bout d'un nombre p convenablement choisi de mesures. Un tel dispositif 22 de mesure peut par exemple être un microprocesseur.

Le dispositif 22 de mesure effectue ainsi une véritable mesure différentielle confirmée sur plusieurs périodes. Il permet ainsi de détecter avec sécurité de faibles variations du facteur de forme des signaux traversant chaque photodétecteur 23 et 24, telles que celles qui résultent par exemple du décrochage d'un poste éloigné (courant continu faible) alors que plusieurs postes proches sont simultanément en sonnerie (courant alternatif élevé) et fournit un signal x représentatif du décrochage, de façon fiable.

Le signal x est un 1 si aucun abonné n'a décroché et un 0 si un abonné à décroché. Le signal x est appliqué à l'entrée d'un monostable 25 qui fournit à sa sortie un signal V. Ce signal V devient égal à 0 si un abonné a décroché et redevient égal à 1 au bout d'un temps approprié.

En reprenant la figure 1, le signal V fourni par le détecteur 5 de l'invention est appliqué à l'entrée des n portes ET ($G_i$) ($1 \leq i \leq n$) des n abonnés. Chaque porte $G_i$ reçoit également le signal $CS_i$ de commande de sonnerie issu des organes de commande, non représentés sur la figure, le signal $H_s$ de sonnerie proprement dit et enfin le signal $DS_i$ inversé au moyen de l'inverseur $F_i$. Si ces quatre signaux $\overline{DS_i}$, $H_s$, $CS_i$ et V sont des 1, le signal $Y_i$ émis par la porte $G_i$ est un 1 et le relais $U_i$ replace les contacts $R_iR_i'$ sur la position $C_iC_i'$. On peut résumer l'état du signal $Y_i$ par $Y_i = \overline{DS_i} + V + H_s + CS_i$. Ainsi à la fin d'un état 0 (creux de sonnerie) du signal $H_s$ de cadencement, si les signaux $\overline{DS_i}$ et V sont encore à l'état 1 (l'abonné n'a pas encore décroché) les contacts $R_i$ et $R_i'$ sont remis en liaison avec le générateur de sonnerie 1 au passage à l'état 1 du signal $H_s$ de cadencement.

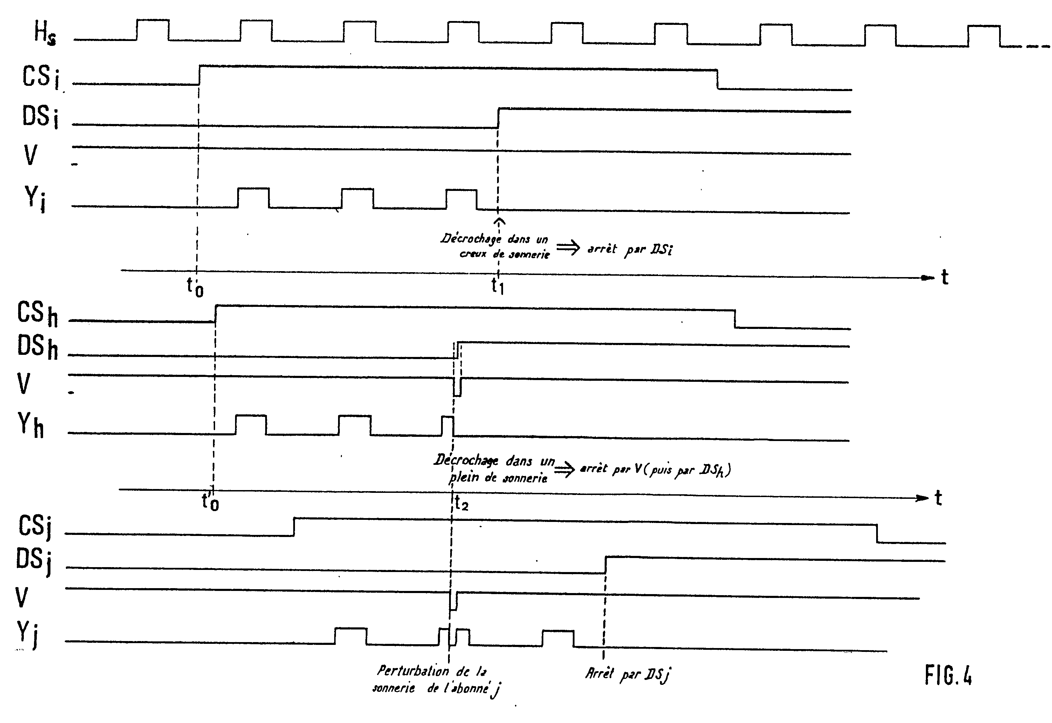

La figure 4 explicite les états avant et après décrochage des signaux $Y_i$, $Y_j$, $Y_h$, pour trois abonnés $Ab_i$, $Ab_j$, $Ab_h$.

Supposons que l'abonné $Ab_i$ soit appelé à un instant $t_0$. Les organes de commande lui transmettent un signal $CS_i$ de commande de sonnerie qui passe à l'état 1 au temps $t_0$. Supposons que cet abonné $Ab_i$ décroche pendant un creux de sonnerie, son dispositif $E_1$ de supervision fournit un signal $DS_i$ que l'on transmet d'une part aux organes de commande et d'autre part, après inversion au moyen de l'inverseur $F_i$, à l'entrée de la porte ET ($G_i$). Le signal $\overline{DS_i}$ maintient le signal $Y_i$ à l'état 0, et le relais $U_i$ ne sera pas actionné au plein de sonnerie suivant.

Supposons que l'abonné $Ab_h$ soit appelé à un instant $t_0'$. Le signal $CS_h$ passe à l'état 1 au temps $t_0'$. Supposons que l'abonné $Ab_h$ décroche son combiné à un instant $t_2$ qui correspond à un plein de sonnerie ($H_s = 1$). En l'absence de signal V l'abonné $Ab_h$ recevrait dans son récepteur un signal à niveau élevé qui serait très désagréable pour lui et néfaste pour son récepteur. Cependant le signal V fourni par le dispositif 5 détecteur du décrochage replace le signal $Y_h$ à l'état 0, commute l'abonné $Ab_h$ sur son dispositif de supervision et ce pendant un temps égal à la largeur de l'impulsion V = 0. La durée pendant laquelle V égale 0, ce qui invalide le signal de sonnerie, est obtenue par un réglage approprié du monostable 25 du dispositif détecteur 5. Cette durée est calculée de telle sorte qu'elle permette l'évanouissement des phénomènes transitoires sur les lignes et plus particulièrement pour que la ligne $a_hb_h$ de l'abonné $Ab_h$ se décharge des parasites dus à la coupure de sonnerie. Cette durée pendant laquelle V égale 0 est avantageusement choisie de l'ordre de 80 ms. Comme cet

abonné $Ab_h$ se trouve pendant ladite durée sur son dispositif $E_h$ de supervision, celui-ci génère un signal $DS_h$ qui maintient ultérieurement le signal $Y_h$ à l'état 0.

Le troisième abonné $Ab_j$ a été appelé au moyen du signal $CS_j$ issu des organes de commande mais n'a pas encore décroché au temps $t_2$ où l'abonné $ab_h$ décroche son combiné. Le signal V généré par le dispositif 5, commun au groupe de n abonnés, invalide donc également l'appel pour l'abonné $Ab_j$ (le signal $Y_j$ passe à l'état 0 aussi longtemps que V égale 0). Comme il n'a pas décroché son combiné lorsque le signal V repasse à l'état 1, et comme son signal de commande de sonnerie CS reste à l'état 1, l'abonné $Ab_j$ est à nouveau connecté au générateur 1 de sonnerie en même temps que les pleins de sonnerie ultérieurs ($H_s = 1$). L'abonné $Ab_j$ n'a ainsi subi qu'une brève interruption au cours d'un plein de sonnerie. On a supposé sur la figure 4 que cet abonné $Ab_j$ décroche ultérieurement au cours d'un creux de sonnerie, c'est le cas de l'abonné $Ab_i$, donc c'est par intervention du signal $DS_j$ que la sonnerie cesse. Mais il serait également possible que l'abonné $Ab_j$ décroche au cours d'un plein de sonnerie, on reviendrait au cas de l'abonné $Ab_h$ pour lequel la sonnerie cesse par intervention du signal V puis par action du signal $DS_h$.

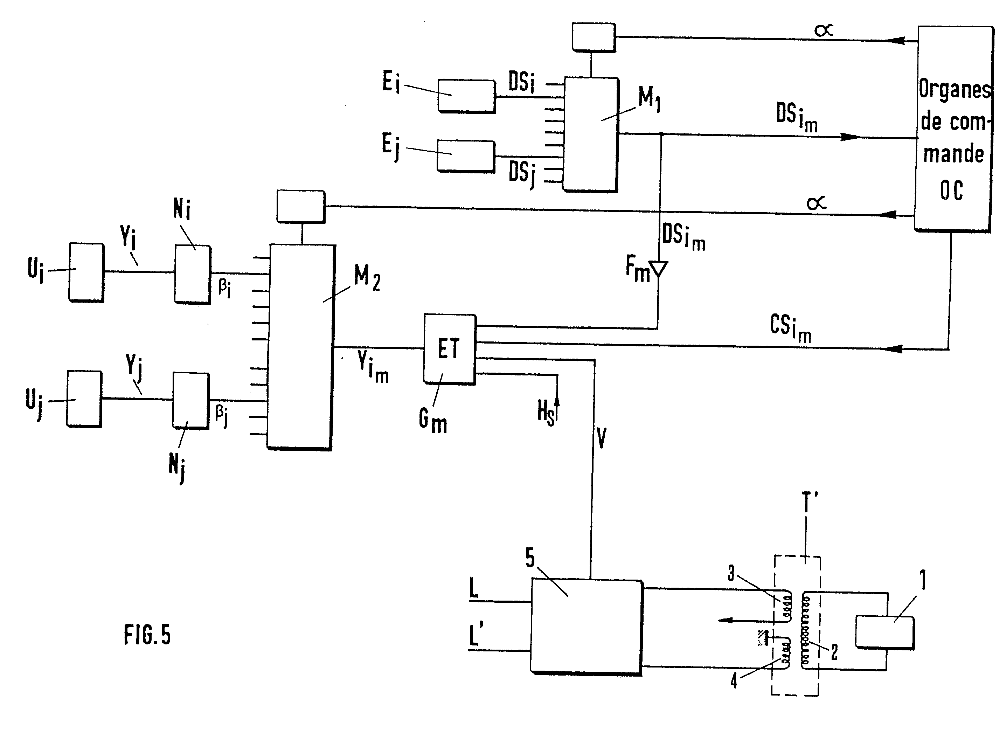

La figure 5 illustre un mode de réalisation préféré de l'invention. Un premier multiplexeur $M_1$ reçoit les n signaux $DS_i$ ($1 \leqslant i \leqslant n$) fournis par les n dispositifs $E_i$ de supervision, et les multiplexes en fonction des adresses $\alpha$ fournies par les organes OC de commande. Le signal $DS_{im}$ fourni par le multiplexeur $M_1$ est inversé au moyen de l'inverseur $F_m$ et le signal $\overline{DS}_{im}$ ainsi obtenu est appliqué à l'entrée d'une porte ET $G_m$. Cette porte $G_m$ reçoit également le signal $H_s$ de cadencement de sonnerie, le signal V fourni par le détecteur 5 représentatif du décrochage d'au moins un abonné pendant un plein de sonnerie, et enfin le signal $CS_{im}$ de commande de sonnerie multiplexé issu des organes de commande OC. Un signal $Y_{im}$ est fourni par la porte $G_m$ et est appliqué à l'entrée d'un démultiplexeur $M_2$ qui fournit n signaux $\beta_i$ en fonction des adresses $\alpha$ fournies par les organes OC de commande. Les n signaux $\beta_i$ sont chacun intégrés au moyen d'intégrateurs $N_i$ qui fournissent chacun en sortie un signal $Y_i$ susceptible de commander le relais $U_i$ correspondant. Ce relais $U_i$ commande le positionnement de l'abonné sur le générateur de sonnerie 1 ainsi qu'il a été précédemment expliqué.

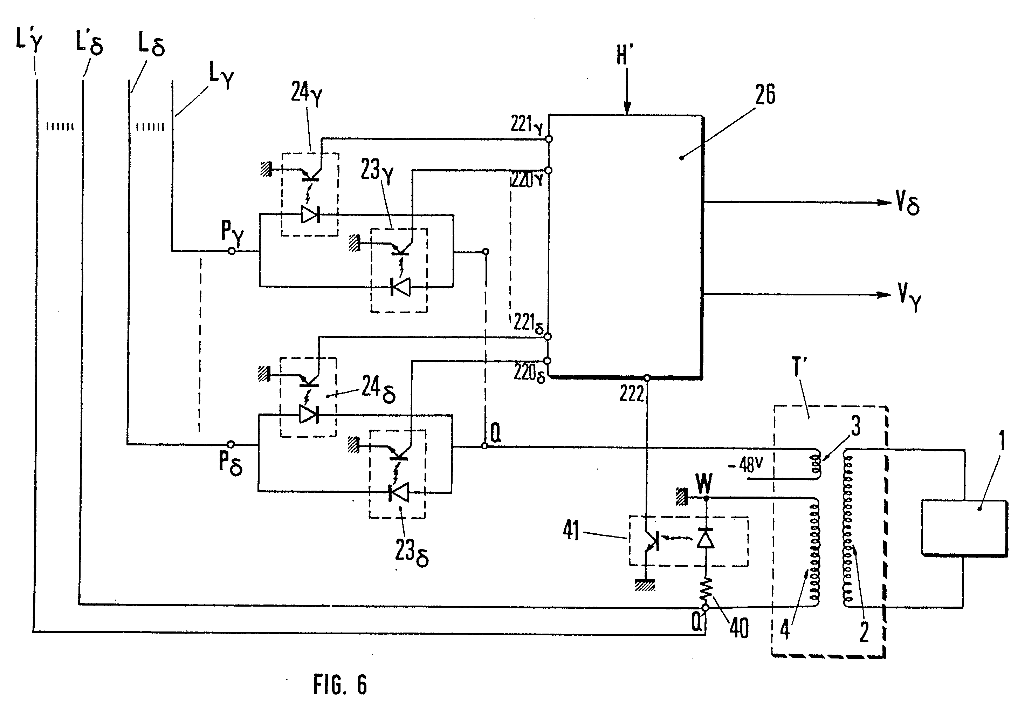

La figure 6 représente une variante de réalisation du dispositif détecteur du décrochage de la figure 2. On remplace le dispositif 22 de mesure par un microprocesseur 26 commun à m groupes de n abonnés. Le microprocesseur travaille en temps partagé pour m groupes de deux photodétecteurs 23 et 24. On dispose donc comme il a été précédemment décrit au moyen de la figure 2 entre les points W et Q' de l'enroulement 4 transmettant le signal d'appel un photodétecteur 41 placé en série avec une résistance 40 qui fournit un courant d'une alternance sur deux à l'entrée 222 du microprocesseur 26. On raccorde en Q' les m lignes $L_j'$ des m groupes d'abonnés et en Q les m groupes de photodétecteurs $23_j$ et $24_j$ montés en inverse qui sont eux-mêmes raccordés en $P\delta$ du groupe $\delta$ pris parmi les m groupes de n abonnés. A cet effet le microprocesseur 26 effectue la mesure en temps partagé pour chaque groupe pris parmi les m groupes, chaque intervalle de temps alloué à un groupe étant réglé au moyen du signal H' d'horloge. Les portes $221_\delta$ et $220_\delta$ reçoivent ainsi qu'il a été expliqué au moyen de la figure 2 les signaux représentatifs du décrochage. Le microprocesseur 26 effectue la mesure $d_2 - d_1/d_0$ pour chaque groupe $\delta$ et en outre fournit une impulsion $V\delta$ de sortie de largeur prédéterminée de la même façon que celle fournie à la sortie du monostable 25 de la figure 2.

Ainsi le dispositif d'arrêt de la sonnerie selon l'invention peut être commun à n abonnés ou même encore à m × n abonnés et est efficace de façon quasi instantanée. Il n'intervient que lorsqu'un abonné a décroché dans un plein de sonnerie. Plus le nombre d'abonnés est grand, plus la probabilité de perturbations des pleins de sonnerie est grande. Cependant un simple calcul statistique montre que pour 32 abonnés, il ne se produit qu'un arrêt de sonnerie tous les mille appels. C'est dire encore qu'il ne se produit qu'une perturbation par an pour un abonné à trafic moyen. Le dispositif selon l'invention est donc extrêmement économique puisqu'il évite les arrêts systématiques pour tous les abonnés pendant tous les états de sonnerie, et permet la détection rapide du décrochage avec un matériel réduit.

Il faut encore souligner que le dispositif de mesure du rapport $d_2 - d_1/d_0$ est un dispositif purement numérique qui présente l'avantage, vis-à-vis d'un dispositif analogique, d'une durée de traitement très réduite. En outre le fonctionnement de ce dispositif n'est pas tributaire de la fréquence d'appel.

**Revendications**

1. Dispositif de commande de sonnerie pour un groupe de lignes d'abonnés ($Ab_i$) desservi par un réseau de connexion (RC), comprenant un relais ($U_i$) pour chaque ligne, le réseau de connexion fournissant un signal de commande de sonnerie ($CS_i$) et un signal de cadencement ($H_s$) pour la commande du relais, un générateur de sonnerie (1) commun au groupe de lignes et fournissant un courant de sonnerie alternatif à une ligne lorsque les contacts du relais correspondant occupent une première position, un dispositif de supervision ($E_i$) pour chaque ligne, relié à celle-ci dans la deuxième position des contacts du relais et délivrant un signal ($DS_i$) au réseau de connexion si le décrochage se produit pendant que les contacts du relais occupent cette deuxième position, et un détecteur de décrochage commun (5) délivrant un signal (V) si un courant continu apparaît, par suite du décrochage, sur l'une au moins des lignes du groupe pendant l'envoi d'un courant de sonnerie (première position du relais), caractérisé par le fait qu'il comprend, sur chaque ligne, un circuit ET ($G_i$), recevant du réseau de connexion le signal de commande de sonnerie ($CS_i$) et le signal de cadencement ($H_s$), relié au dispositif de supervision ($E_i$) par l'intermédiaire d'un inverseur ($F_i$), et au détecteur de décrochage commun (5) et dont le signal de sortie ($Y_i$) commande le relais ($U_i$), le détecteur de décrochage commun (5) comprenant à sa sortie un monostable (25) fournissant un signal (V) d'arrêt de sonnerie de durée suffisante pour permettre la détection du décrochage par le dispositif de supervision ($E_i$) après basculement des contacts de relais.

2. Dispositif selon la revendication 1, caractérisé par le fait qu'il comprend un multiplexeur ($M_1$) recevant l'ensemble des signaux ($DS_i$) émis par les dispositifs de supervision ($E_i$), et dont la sortie ($DS_{im}$) est reliée au circuit ET ($G_m$) recevant par ailleurs du réseau de connexion un signal ($CS_{im}$) multiplexé représentant les signaux de commande de sonnerie ($CS_i$) du groupe de lignes, et un démultiplexeur ($M_2$) relié à la sortie ($Y_{im}$) du circuit ET et délivrant des signaux de sortie pour la commande des relais ($U_i$).

3. Dispositif selon l'une des revendications 1 et 2, caractérisé par le fait que le détecteur de décrochage commun (5) comprend deux photocoupleurs (23, 24) montés en parallèle et en sens inverses entre le générateur de sonnerie (1) et le groupe de lignes d'abonné et fournissant des signaux correspondant respectivement aux alternances positives et négatives du courant appliqué, un photocoupleur (41) recevant le courant alternatif émis par le générateur de sonnerie (1) et fournissant un signal de référence, et un dispositif de mesure (22) recevant les signaux des deux photocoupleurs et le signal de référence et délivrant au monostable (25) un signal (X) lorsque le rapport $d_2 - d_1/d_0$ dépasse une valeur déterminée, $d_1$ et $d_2$ désignant la durée des alternances positive et négative du courant appliqué aux deux photocoupleurs et $d_0$ la durée d'une alternance dudit courant alternatif.

4. Dispositif selon la revendication 3, caractérisé par le fait que le dispositif de mesure est un dispositif numérique.

## Claims

1. Ringing control device for a group of subscriber lines ($Ab_i$) served by a connection network (RC), comprising a relay ($U_i$) for each line, the connection network providing a ringing control signal ($CS_i$) and a timing signal ($H_s$) for controlling the relay, a ringing generator (1) common to the group of lines and providing an A. C. ringing current to a line when the contacts of the corresponding relay occupie a first position, a supervisory circuit ($E_i$) for each line, connected thereto in the second position of the contacts of the relay and delivering a signal ($DS_i$) to the connection network if the receiver is lifted whilst the contacts of the relay occupies said second position, and a common off-hook condition detector (5) delivering a signal (V) if a D. C. current appears, due to the receiver being lifted, on at least one of the lines of the group while a ringing current is being fed (first position of the relay), characterized in that it comprises and AND circuit ($G_i$) receiving from the connection network the ringing control signal ($CS_i$) and the timing signal ($H_s$), connected to the supervisory circuit ($E_i$) by means of an inverter ($F_i$), and to the off-hook condition detector (5) and whose out-put signal ($Y_i$) controls the relay ($U_i$) the off-hook condition detector (5) comprising at its output a monostable multivibrator (25) a stop-ringing signal (V) the duration of which is sufficient to enable the off-hook detection by the supervisory circuit ($E_i$) once the contacts of the relay have pivoted.

2. The device according to claim 1, characterized in that it comprises a multiplexer ($M_1$) receiving all the signals ($DS_i$) produced by the supervisory circuit ($E_i$) and having its output ($DS_{im}$) connected to the AND circuit ($G_m$) which receives from the connection network a multiplexed signal ($CS_{im}$) representing the ringing control signals ($CS_i$) of the group of lines, and a demultiplexer ($M_2$) connected to the output ($Y_{im}$) of the AND circuit and delivering output signals for controlling the relays ($U_i$).

3. The device according to one of claims 1 and 2, characterized in that the common off-hook condition detector (5), comprises two photocouplers (23, 24) mounted in parallel and inverted with respect to each other between the ringing generator (1) and the group of subscriber lines and providing signals corresponding respectively to the positive and negative alternations of the current applied, a photocoupler (4) receiving the A. C. current produced by the ringing generator (1) and providing a reference signal, and a measuring device (22) receiving the signals from the two photocouplers and the reference signal and delivering to the monostable multivibrator (25) a signal (X) when the ratio $d_2 - d_1/d_0$ exceeds a determined value, $d_1$ and $d_2$ standing for the duration of the positive and negative alternations of current applied to the two photocouplers and $d_0$ the duration of an alternation of said A. C. current.

4. The device according to claim 3, characterized in that the measuring device is a digital device.

## Ansprüche

1. Wecker-Steuereinrichtung für eine Gruppe von Fernsprechleitungen ($Ab_i$), die von einem Fernmeldenetz (RC) versorgt wird, mit einem Relais ($U_i$) für jede Leitung, wobei das Fernmeldenetz ein Wecker-Steuersignal ($CS_i$) und ein Takt-

signal (H$_s$) zur Betätigung des Relais liefert, einem der Gruppe von Fernsprechleitungen gemeinsamen Weckerzeichen-Generator (1), der einen Wecker-Wechselstrom für eine Teilnehmerleitung liefert, wenn die Kontakte des entsprechenden Relais eine erste Position einnehmen, einem Überwachungskreis (E$_i$) für jede Teilnehmerleitung, der an diese in der zweiten Position der Kontakte des Relais angeschlossen ist und ein Signal (DS$_i$) an das Fernmeldenetz abgibt, wenn die Hörerabnahme erfolgt, während die Kontakte des Relais diese zweite Position einnehmen, und mit einem gemeinsamen Hörerabnahme-Detektor (5), der ein Signal (V) abgibt, wenn infolge der Hörerabnahme auf mindestens einer der Leitungen der Gruppe während der Abnahme eines Weckerstroms (erste Position des Relais) ein Gleichstrom erscheint, dadurch gekennzeichnet, daß sie auf jeder Leitung einen Schaltkreis ET (G$_i$) aufweist, der von dem Fernmeldenetz das Wecker-Steuersignal (CS$_i$) und das Taktsignal (H$_s$) empfängt und an den Überwachungskreis (E$_i$) über einen Inverter (F$_i$) und an den gemeinsamen Hörerabnahme-Detektor (5) angeschlossen ist, und dessen Ausgangssignal (Y$_i$) das Relais (U$_i$) steuert, und daß der gemeinsame Hörerabnahme-Detektor (5) an seinem Ausgang einen monostabilen Schaltkreis (25) hat, der ein Weckerruhende-Signal (V) ausreichender Dauer abgibt, um das Feststellen der Hörerabnahme durch den Überwachungskreis (E$_i$) nach dem Umschalten der Kontakte des Relais zu ermöglichen.

2. Wecker-Steuereinrichtung nach Anspruch 1, dadurch gekennzeichnet, daß sie einen Multiplexer (M$_1$), der die Gesamtheit der von dem Überwachungskreis (E$_i$) ausgesandten Signale (DS$_i$) empfängt und dessen Ausgang (DS$_{im}$) an den Schaltkreis ET (G$_m$) angeschlossen ist, der außerdem von dem Fernmeldenetz ein Multiplexsignal (CS$_{im}$) empfängt, welches die Wecker-Steuersignale (CS$_i$) der Gruppe von Leitungen repräsentiert, und einen Demultiplexer (M$_2$) aufweist, der an den Ausgang (Y$_{im}$) des Schaltkreises ET angeschlossen ist und Ausgangssignale zur Steuerung des Relais (U$_i$) liefert.

3. Wecker-Steuereinrichtung nach einem der Ansprüche 1 und 2, dadurch gekennzeichnet, daß der gemeinsame Hörerabnahme-Detektor (5) zwei Photokoppel (23, 24), die parallel und in umgekehrter Richtung zwischen dem Weckerzeichen-Generator (1) und der Gruppe von Fernsprechleitungen geschaltet sind und Signale liefern, die jeweils den positiven und negativen Halbperioden des angelegten Stromes entsprechen, einen Photokoppel (41), der den von dem Weckerzeichen-Generator (1) ausgesandten Wechselstrom empfängt und ein Bezugssignal liefert, und eine Meßanordnung (22) umfaßt, die die Signale der beiden Photokoppel und das Bezugssignal empfängt und an den monostabilen Schaltkreis (25) ein Signal (X) abgibt, wenn das Verhältnis $d_2 - d_1/d_o$ einen vorgegebenen Wert überschreitet, wobei $d_1$ und $d_2$ die Dauer der positiven und negativen Halbperioden des an die beiden Photokoppel angelegten Stromes und $d_o$ die Dauer einer Halbperiode des genannten Wechselstromes bedeuten.

4. Wecker-Steuereinrichtung nach Anspruch 3, dadurch gekennzeichnet, daß die Meßanordnung eine numerische Anordnung ist.

FIG. I

FIG. 2

FIG. 3

FIG.4

Décrochage dans un creux de sonnerie $\Longrightarrow$ arrêt par DSi

Décrochage dans un plein de sonnerie $\Longrightarrow$ arrêt par V (puis par $DS_h$)

Arrêt par DSj

Perturbation de la sonnerie de l'abonné j

$H_s$  $CS_i$  $DS_i$  $V$  $Y_i$

$CS_h$  $DS_h$  $V$  $Y_h$

$CS_j$  $DS_j$  $V$  $Y_j$

$t_0$  $t_1$  $t$

$t_0$  $t_2$  $t$

4

FIG.5

FIG. 6

0 018 859